# EUROPEAN PATENT APPLICATION

(11) **EP 4 734 456 A1**
(43) Date of publication of application: **29.04.2026**
(21) Application number: 25209829.8
(22) Date of filing: 20.10.2025
(51) Int. Cl.: H04L 12/403

(54) **SYSTEM, METHOD, AND APPARATUS FOR JOINT PACKET COMMUNICATION**

(30) Priority: 24.10.2024 US 202418925374
(71) Applicant: NXP B.V., 5656 AG Eindhoven (NL)
(72) Inventor: Weiss, Matthias, 5656 AG Eindhoven (NL); Dohl, Jan, 5656 AG Eindhoven (NL); Bohn, Sebastian, 5656 AG Eindhoven (NL)
(74) Representative: Schmütz, Christian Klaus Johannes

(57) **Abstract**

Joint packet communication includes transmitting, by an initial source node, at least a prefix of a joint packet over a shared communication medium. One or more additional source nodes on the shared communication medium transmit respective data of the joint packet over the shared communication medium after the transmission by the initial source node in a respective time interval. A final source node on the shared communication medium transmits at least a postfix of the joint packet after the transmission by the one or more additional source nodes. A destination node receives the joint packet over the shared communication medium and optionally dispatches the data of the source nodes to another network device.

## Description

### FIELD OF USE

The present disclosure relates generally to data communication, and more particularly, to a system, method, and apparatus for joint packet communication over a communication medium shared by a plurality of communication nodes.

### BACKGROUND

Multiple source nodes which are communication devices on a shared communication medium such as Ethernet transmit data encapsulated in respective packets to a destination node which is also a communication device on the shared communication medium. Each source node is granted access to the shared communication medium during which the source node transmits its data in the respective packet. In this way, the source nodes transmit respective packets one after the other on the shared communication medium to the destination node.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is an example block diagram of a communication system including a plurality of source nodes and a destination mode which are coupled by a shared communication medium in accordance with one or more embodiments.
FIG. 2 illustrates the example communication system in more detail to facilitate the joint packet communication in accordance with one or more embodiments.
FIG. 3 illustrates an example communication system having a low speed network connected to a high speed network to facilitate the joint packet communication with one or more embodiments.
FIG. 4 illustrates an example joint packet in the form of an Ethernet packet in accordance with one or more embodiments.
FIG. 5 is a flow chart of example functions associated with joint packet communication in accordance with one or more embodiments.

### DETAILED DESCRIPTION

The detailed description of the appended drawings is intended as a description of the currently preferred embodiments of the present disclosure, and is not intended to represent the only form in which the present disclosure may be practiced. It is to be understood that the same or equivalent functions may be accomplished by different embodiments that are intended to be encompassed within the scope of the present disclosure.

Source nodes transmitting respective packets to a destination node over a shared communication medium such as Ethernet results in latency for data from a source node to reach a destination node. Additionally, transmitting a packet from the source node to the destination node results in poor network utilization because of overhead associated with transmitting each packet from each source node to the destination node. This latency and poor utilization especially becomes a concern in low data rate communication where the packets carry real time data such as audio data which rely on a data transfer from source to destination with a minimum latency to maintain a real-time nature of the data.

Embodiments disclosed herein are directed to joint packet communication where a plurality of source nodes jointly transmit a single joint packet to a destination node on a shared communication medium. Each source node transmits at a precise time to collectively transmit a prefix, payload, and postfix of the joint packet transmitted over the shared communication medium rather than each packet transmitting a respective packet with its own prefix, payload, and postfix. Transmission of the joint packet reduces latency in data transmission by the source nodes especially when the nodes are sending small data chunks and is transparent to nodes which do not support joint packet communication. Well known instructions, protocols, structures, and techniques have not been shown in detail in order not to obfuscate the description.

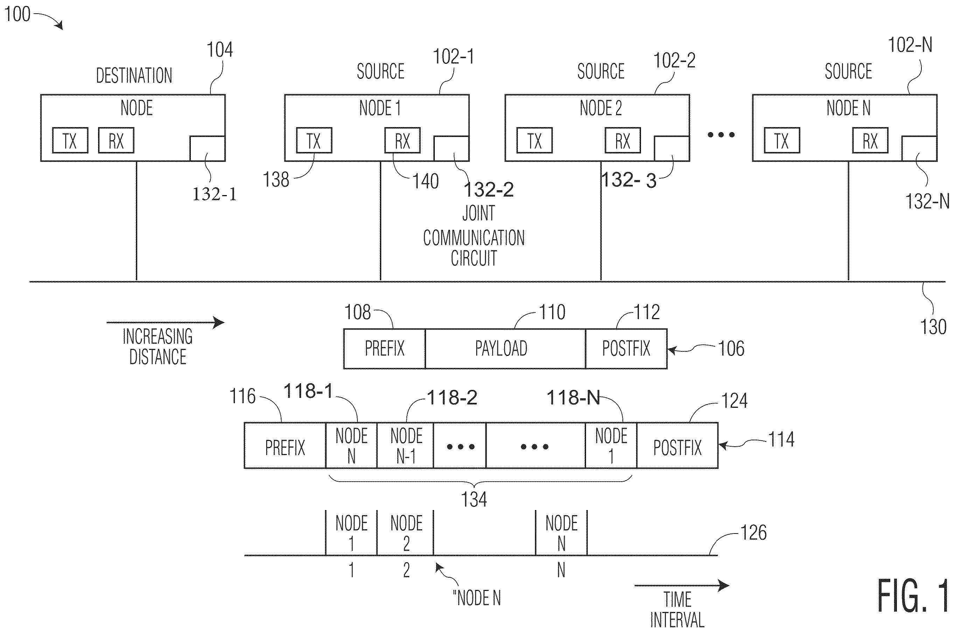

FIG. 1 is an example block diagram of a communication system 100 including a plurality of source nodes 102 and a destination node 104 which are coupled by a shared communication medium 130 in accordance with one or more embodiments. The source node 102 and destination node 104 may be communication devices that transmit data over the shared communication medium or receive data from the shared communication medium 130. Examples of such nodes may include but not be limited to laptops, computers, routers, sensors, cameras or microphones that generate data. The source node 102 and destination node 104 may have a respective transmitter and receiver, an example of which is shown as transmitter 138 and receiver 140 of a source node for transmitting and receiving signals over the shared communication medium 130 and a processor (not shown) for controlling operation in the node. The signals may take the form of at least a portion of a packet in one or more embodiments. The shared communication medium 130 may be a wire, air, or water, as examples, which the nodes 102 share to transmit and receive signals. The nodes 102 access the shared communication medium 130 based on a protocol such as Ethernet (10-Base-T), a controller area network (CAN), or CAN flexible data rate (FD) which operates via the shared communication medium 130 where each node 102 accesses the shared communication medium 130 when no other node is transmitting at the same time to transmit over the shared communication medium 130. The shared communication medium 130 is not a point-to-point physical connection between respective nodes and each node is able to hear transmissions by the other nodes and directly receive from the other nodes. Multiple nodes could transmit at a same time over the shared communication medium resulting in collisions so the transmission between nodes 102 is coordinated to avoid collisions and based on when the shared communication medium 130 is detected to be idle. The source node 102, destination node 104 and associated components described herein in FIG. 1 and which enable the joint packet communication may be implemented with circuitry such as one or more of analog circuitry, mix signal circuitry, memory circuitry, logic circuitry, or processing circuitry that executes code stored in a memory that when executed by the processing circuitry performs the disclosed functions.

To simplify explanation and no way to be construed as a limitation, the source nodes 102 are illustrated as being arranged in increasing distance from the destination node 104 on the shared communication medium 130. In one or more embodiments, destination node 104 may be located at one end of the shared communication medium 130 and source nodes 102 may be located at increasing distances from the destination node 104. The communication system 100 is shown to include one destination node 104 and N source nodes 102 ranging from source node 1 to N, where N is an integer. In one or more embodiments, the arrangement of the source nodes 102 with respect to the destination node 104 is not so limited with an assumption that any communication on the shared communication medium 130 from one node on the shared communication medium 130 to another node is relatively instantaneous. Further, a source node could be arranged also as a destination node in one or more embodiments or a plurality of nodes may be destination nodes in other embodiments.

A source node 102 typically transmits a standard packet 106 to the destination node 104 which includes the data to be transmitted. The standard packet 106 includes a prefix 108, a payload 110, and a postfix 112 where the data to be transmitted is carried in the payload 110. The payload 110 is limited to data of one source node 102. If another source node wishes to transmit data, the other source node needs to wait until the transmission is completed and then transmit another standard packet 106 with its data. The standard packet 106 which is used to transmit data has overhead including the prefix 108 which might include source and destination information for the packet and postfix 112 which includes a checksum resulting in poor network utilization when multiple source nodes transmit respective standard packet 106 because of the overhead to transmit the packet having the data of one node. Further, each source node transmits its standard packet 106 one after the other increasing a time that data from a source node is able to reach the destination node 104. The latency and poor utilization especially becomes a concern in low data rate communication where the packets carries real time data such as audio data or video data which rely on a transfer from source to destination with a minimum latency to maintain a real-time nature of the data.

Embodiments are directed to the source nodes 102 transmitting respective data to the destination node 104 in a joint packet 114 which is transmitted to the destination node 104 rather than each source node transmitting a respective standard packet 106 to the destination node 104. Each source node and destination node 104 may have a respective joint communication circuit to allow the transmitter to transmit or receive to receive the joint packet shown as joint communication circuit 132-1 to 132-N.

The joint packet 114 has a plurality of fields including a prefix 116, a payload 134, and an postfix 124. The prefix 116 may have a preamble with a predetermined pattern of bits to identify to the source node 102 or destination node 104 that the packet is a joint packet 114 rather than the standard packet 106 and a beginning of the joint packet 114. In one or more embodiments, the preamble may include a 2 octet Ethernet Type field which indicates whether the packet is a joint packet 114 or standard packet 106. The payload 134 may include respective data from the source nodes 102. The payload 134 may include a plurality of slots 118-1 to 118-N where each slot carries data from a respective source node shown as slots 1 to N and each slot corresponds to a particular source node. In one or more embodiments, source node 102-1 may transmit its data in slot 118-1. In one or more embodiments, source node 102-2 may transmit its data in slot 118-2. In one or more embodiments, source node 102-3 may transmit its data in slot 118-3. In one or more embodiments, each source node may transmit in addition to respective data padding bits to define a guard interval between data transmitted in different slots. The padding may be a sequence of bits such as a string of zero or one bits and define a guard interval of a certain duration depending on a data rate of the shared communication medium 130. The postfix 124 may be a sequence of bits that allows for determining whether the joint packet 114 is corrupted or not such as by a checksum defined by contents of the fields in the joint packet 114 and indicate an end of the joint packet 114.

A source node may transmit respective data in a slot of the joint packet based on a timing of a time interval assigned to the source node. A plurality of time intervals 126 is defined where each time interval is assigned to a source node. A source node assigned to a time interval transmits respective data in the assigned time interval to define data which is carried in the slot of the joint packet 114 assigned to the source node. In one or more embodiments, each of the time intervals 1-N do not overlap and source nodes 102 closer to the destination node 104 transmit data later in the joint packet 114 compared to source nodes 102 further from the destination node 104. A duration of an interval may also vary depending on a transmission speed of the joint packet 114, the shared communication medium type (e.g., water, air, wire), and type of transmission signal (light, sound, electromagnetic wave etc.).

In one or more embodiments, the source node 102-N which is furthest from the destination node 104 may transmit the prefix 116 or data and the prefix 116 in a first slot 118-1 of the joint packet 114 at a first time interval to transmit the prefix 116 and data. A source node closer to the destination node 104 will then transmit respective data in the respective slot assigned to the source node at a respective time interval. In one or more embodiments, the source node 102-(N-1) may transmit data in slot 118-2 of the joint packet 114 at a time interval 2, the source node 118-(N-2) adjacent to the source node 118-(N-1) and closer to the destination node 104 may transmit data in slot 3 a later time interval 3, etc. The source node 102-1 which is closest to the destination node 104 transmits data and the postfix 124 or the postfix 124 in an assigned slot N of the joint packet 114 at a time interval N to transmit the data and the postfix 124. Based on the arranged transmission by the source nodes 102 in assigned slots at the assigned time intervals, the joint packet 114 is received by the destination node 104 as a single joint packet with the prefix 116, payload 134, and postfix 124 which has data from the plurality of source nodes 102. The joint packet communication reduces latency in data transmission by the source nodes 102 especially when the source nodes 102 are sending small data chunks such as audio or video data because each source node does not need to transmit a respective standard packet 106 with associated overhead. Further, the joint packet 114 has a format similar to that of the standard packet 106 and results in the communication being transparent to source nodes 102 which do not support the joint packet communication with the joint packet 114.

In one or more embodiments, the source node 102-N node may transmit only the prefix 116 or transmit both the prefix 116 and data. In one or more embodiments, the source node 102-1 may transmit only the postfix 124 or transmit both the postfix 124 and data. If the source node 102-N does not transmit the prefix, a next source node which has data to transmit may transmit the prefix. In some embodiments, another source node may transmit the postfix 124 if the source node 102-1 does not transmit the postfix.

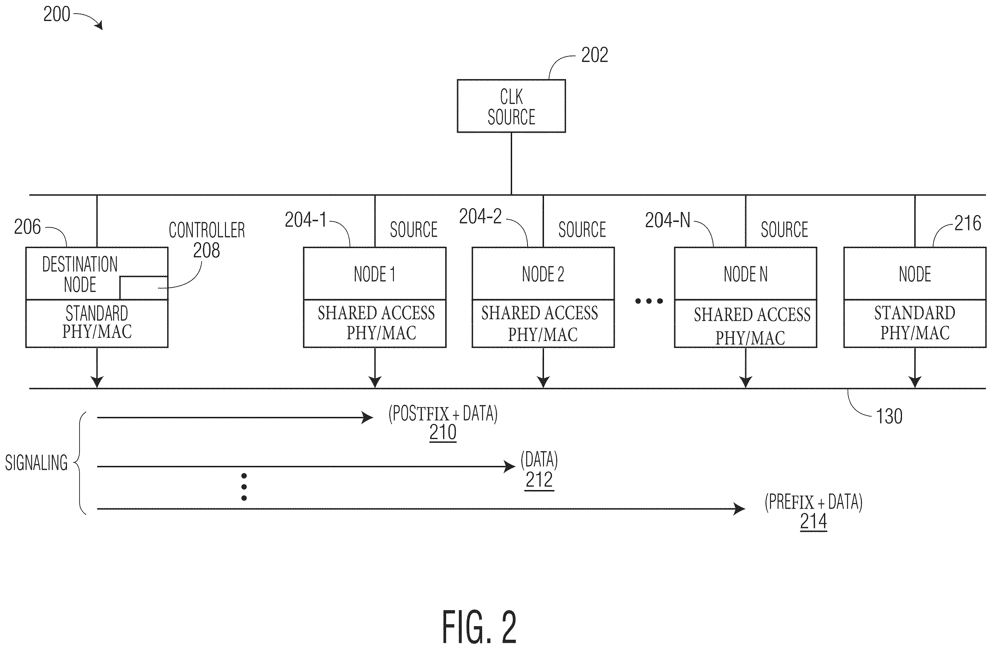

FIG. 2 illustrates the example communication system 100 in more detail to facilitate the joint packet communication in accordance with one or more embodiments. Communication system 200 may have a clock source 202 which defines a reference clock for the source nodes 204 and destination node 206. The clock source 202 may be a single clock source or represent timing of synchronized clock sources located on each source node 204. The destination node 206 or some other node may have a controller 208 (e.g., processor) which provides one or more of a signaling of which source node transmits the prefix 116 of the joint packet 114, an order by which the different source nodes 204 transmit respective data in a slot 118 of the payload 134 of the joint packet 114, and which node transmits the postfix 124 of the joint packet 114 to complete transmission of the joint packet 114. In one or more embodiments, the controller 208 may signal by signal 210 the source node 1 (204-1) to write the prefix 116 and data or the prefix 116 in a first slot of the joint packet 114 and at a first time interval. Additionally, the controller 102 may signal by one or more signals 212 the source nodes 2 to N-1 (204-2 to 204-N-1) to write respective data in increasing time intervals in respective slots of the joint packet 114. Additionally, the controller 102 may signal by signal 214 the source node N (204-N) to write the postfix 124 and data or the postfix 124 in an N slot of the joint packet 114 at an N time interval. The signaling may be a control packet in an example which is transmitted over the shared communication medium 130 and indicate a start time and duration of an interval when a source node is to transmit to form the joint packet 114. The source node may determine when the interval starts and stops based on the clock timing or relative timing to when the prefix is detected.

In one or more embodiments, a precision (e.g., timing accuracy) of the clock source 202 to maintain a time may depend on a data rate of the shared communication medium 130 where the precision of the clock source 202 is higher as the data rate increases. Further, a source node may transmit data in an assigned slot. In one or more embodiments, the source node may transmit in the slot an alive signature that indicates that the source node is operational in addition to or instead of transmitting the data. This alive signature may be a predetermined sequence of bits or a checksum calculated based on contents of the one or more slots of the joint packet 114 that identifies if valid that the source node is operational. The alive signature may be used by the destination node 206 to verify whether a source node is operational even if the source node does not have data to transmit. If the joint packet 114 is received and detected, but the slot associated with a source node does not have a valid alive signature, then the source node may be malfunctioning and the destination node 206 which receives the joint packet 114 may generate a warning signal for example to a display or host processor. In one or more embodiments, a source node in a vehicle may be associated with vehicle braking and not send application data in the form of braking application data all the time. The transmission of the alive signature allows for the controller 208 to monitor proper operation of the source node while the source node is not transmitting the application data. Further, in one or more embodiments based on detecting that the source node is not transmitting application data, the destination node 206 which acts as the controller 208 may change a timing or participation of the source nodes 204 in generating the joint packet 114 so that the source node does not transmit data or uses a different slot to transmit data in the joint packet 114. In one or more embodiments, the destination node 206 may have a side channel different from the shared communication medium 130 to detect node failures or notify the source node of changed timing or participation in generating the joint packet 114.

In some embodiments, a node may malfunction and not generate a postfix or prefix of a joint packet 114 when it is assigned to do so. The other nodes may be monitoring transmission on the shared communication medium 130 including transmission of the postfix or prefix. Because the prefix and postfix are transmitted at specific times in construction of the joint packet 114, other nodes can detect failure of the node to transmit the postfix or prefix by monitoring transmissions on the shared communication medium 130. If a node which is arranged by the controller 208 to transmit its data determines it is time to transmit but that no prefix has been transmitted, the node may transmit the prefix along with any data followed by a postfix. Subsequent nodes may transmit respective data in another joint packet to make sure the joint packet 114 has a compliant format and timing and any delayed transmission of data may be handled by upper communication layers. Similarly, if a node determines that data is transmitted in a slot but no node has transmitted the postfix, the node may transmit the postfix to make sure the joint packet 114 has a compliant format. The node which is to transmit the postfix may be the node N which transmitted data in slot N and if unavailable transmission of the postfix is assigned to a node which most recently transmitted and is available to transmit. If no node transmits the postfix in a defined time interval before the destination node begins to receive the joint packet 114, then the postfix is not transmitted and the destination node discards the joint packet 114 as non-compliant. By other nodes detecting failure to transmit a postfix or prefix, error recovery is handled at lower layers of a communication stack (physical layer/media access control layers) rather than as an error recovery process in upper software layers of the communication stack.

In one or more embodiments, communication system 200 may include not only the source node 204 but another node 216. Each source node of the plurality of source nodes 204 may have shared access physical layer/media access control (PHY/MAC) transmit circuitry of the joint packet communication circuitry which is arranged to cause the source node to transmit data of the source node in a slot of the joint packet 114. The PHY circuitry performs bit level transmission on the shared communication medium 130 while the MAC circuitry indicates contents of the prefix, payload and/or postfix of the packet to be transmitted depending on signaling by the destination node 206. In one or more embodiments, the shared access PHY/MAC transmit circuitry may violate standard shared media access protocols (e.g., collision avoidance or communication medium idle before transmission) by transmitting a portion of the joint packet while another node has not completed transmission of a packet, being the prefix, payload, and postfix. The standard communication circuitry 134 of the destination node 206 may have standard receive PHY/MAC circuitry to receive the standard packet 106 and the joint packet 114 even though it was jointly transmitted by the source nodes 204 because a format of both the joint packet 114 and standard packet 106 is the same with a prefix, payload, and postfix. Further, the other node 216 may have standard receive PHY/MAC circuitry to transmit and receive the standard packet or joint packet 114 but not generate the joint packet 114 or parse out the data from the source nodes carried by the joint packet 114. Upper communication layer processing of the communication circuitry (e.g., the application layer of an open systems interconnect (OSI) standard model for communication) of the destination node 206 may be configured to parse the payload of the joint packet 114 that is received by the standard receive PHY/MAC circuitry to identify data from multiple source nodes rather than data from a single source node as with a standard packet and dispatch the data to another network device. Advantageously, source nodes 204 which can perform joint packet communication may operate seamlessly with a node 216 which cannot perform joint packet communication over the same shared communication medium 130.

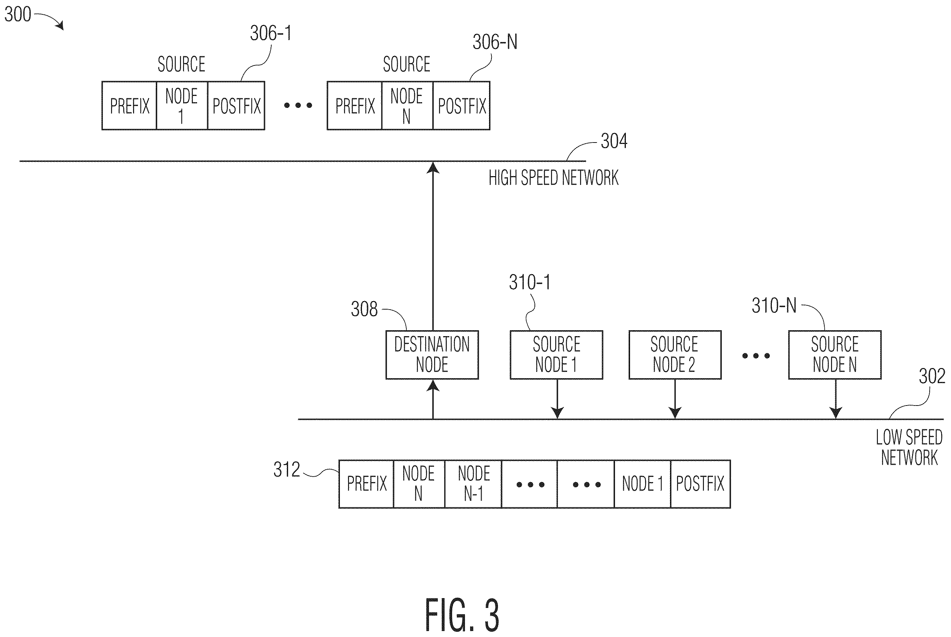

FIG. 3 illustrates an example communication system 300 having a low speed network 302 connected to a high speed network 304 to facilitate the joint packet communication in accordance with one or more embodiments. The high speed network 304 may transmit and receive packets at a higher data rate relative to the low speed network 302. The destination node 308 or some other node on the low speed network 302 that has received the joint packet 312 may transmit standard packets to the high speed network 304 in one or more embodiments based on a joint packet 312 that is received by the destination node 308. The data may be transmitted over the high speed network 304 as separate packets and with the high overhead because the data rate is faster than the low speed network 302 to reduce any associated latency. The destination node 308 may parse the data of the joint packet 312 and transmit a separate standard packet 306 associated with data from a respective source node shown as standard packets 306-1 to 306-N corresponding to the source nodes 310-1 to 310-N. In one or more embodiments, the destination node 308 may transmit a standard packet 306-1 with data from source node 310-1, the destination node 308 may transmit a standard packet 306-2 with data from source node 310-2 etc. over the high speed network 304. In one or more embodiments, a prefix or payload of the standard packet may have a time stamp or node identification to identify that the data in the standard packet is from a particular source node and when it was transmitted. This way any node on the high speed network 304 is able to receive the packet without needing upper communication layers capable of parsing the payload of the received joint packet 312 to recover respective data transmitted by the source nodes.

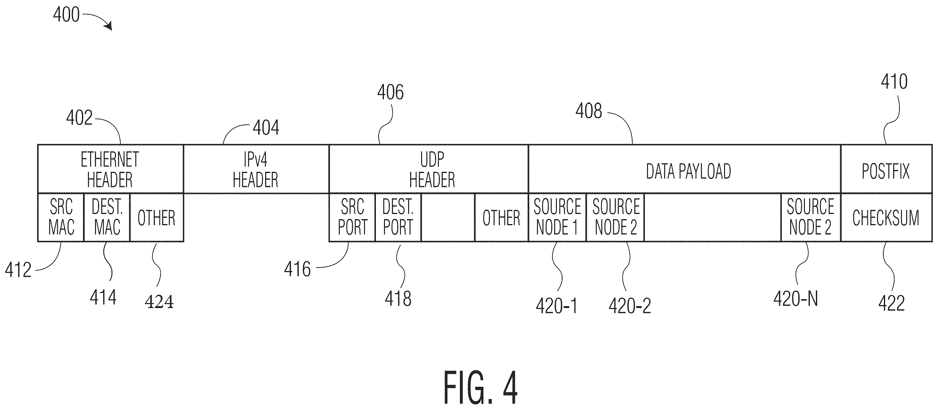

FIG. 4 illustrates an example joint packet 400 in the form of an Ethernet packet in accordance with one or more embodiments. The joint packet 400 may have a prefix which is 42 bytes, a payload 408, and a postfix 410. The prefix includes an Ethernet header 402 which indicates a media access (MAC) source node address and MAC destination node address of the joint packet 400, and a field 424 which may indicate a type of the packet such as a joint packet versus a standard packet. The prefix further includes an IPv4 header 404 which if populated indicates an IP address of a device in the source node and destination node that is to transmit or receive the joint packet 400, and a user datagram protocol (UDP) header 406 which indicates a source port and destination port of the joint packet 400 for transmitting or receiving the joint packet 400. The source node may use the prefix to identify a start of the joint packet. The payload 408 may include a plurality of slots 420, each assigned to a particular node. A source node may transmit data in a designated slot of the payload 408. In one or more embodiments, the postfix 410 may define a checksum 422 which may be added to an end of the joint packet 400. A last source node which is to transmit data in the payload 408 or another source node may calculate the checksum based on listening to bits of the joint packet 400 which are transmitted and transmit the checksum 422 as the postfix 410 of the joint packet 400.

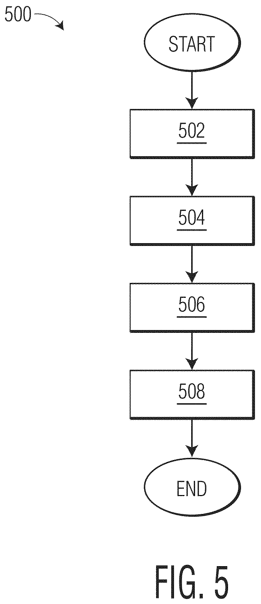

FIG. 5 is a flow chart of example functions 500 associated with joint packet communication in accordance with one or more embodiments. At 502, an initial source node transmits over a shared communication medium at least a prefix of a joint packet. At 504, one or more additional source nodes transmit respective data of the joint packet over the shared communication medium after the transmission of the initial source node in a respective time interval. At 506, a final node transmits over the shared communication medium at least a postfix of the joint packet after the transmission by the additional source nodes. The initial node, one or more additional nodes, and final node may transmit in the assigned intervals which directly follow each other and are not overlapping transmissions. At 508, a destination node receives the joint packet over the shared communication medium. The joint packet received by the destination node appears as a standard packet to nodes which are not arranged to transmit the joint packet. Further, upper communication layers configured to parse the payload of the joint packet may parse the payload of the joint packet to recover the data transmitted by the plurality of nodes.

In one or more embodiments, a method is disclosed. The method includes transmitting, by an initial source node, at least a prefix of a joint packet over a shared communication medium; transmitting, by one or more additional source nodes on the shared communication medium, respective data of the joint packet over the shared communication medium after the transmission by the initial source node in a respective time interval; transmitting, by a final source node on the shared communication medium, at least a postfix of the joint packet after the transmission by the one or more additional source nodes; and receiving, by the destination node, the joint packet over the shared communication medium wherein a format of the joint packet comprises the prefix directly followed by data of the one or more source node and the data of the one or more source node is directly followed by the postfix. In one or more embodiments, the transmission by the initial node, the one or more additional source nodes, and the final node do not overlap in time. In one or more embodiments, the method further includes determining, by one source node, that the one source node has no data to transmit and transmitting by the one source node only an alive signature in the joint packet indicative of the one source node being operational and not transmitting any data. In one or more embodiments, the method further includes signaling a timing when the one or more additional source nodes are to transmit respective data. In one or more embodiments, the method further includes determining, by one source node, that a prefix or postfix of a second joint packet is not transmitted by another source node and transmitting, by the one source node, the prefix or postfix of the second joint packet. In one or more embodiments, the one source node that transmits the postfix of the second joint packet is a most recent source node that transmitted data and the one source node that transmits the prefix of the second joint packet is a first source node which has data to transmit. In one or more embodiments, the shared communication medium is a low speed network, the method further includes parsing, by the destination node, the data transmitted by each source node, and transmitting by the destination node the data of each of the source nodes in a respective standard packet over a high speed network. In one or more embodiments, the shared network is an Ethernet network, the prefix includes an Ethernet header, and the postfix includes a checksum based on contents of the joint packet.

In one or more embodiments, a method performed by source node in a shared communication medium including the source node and a destination node is disclosed, The method includes: receiving, by the source node, a signal indicating a timing to transmit data in a joint packet over the shared communication medium; and transmitting, by the source node and based on the timing, data and not a prefix or postfix of the joint packet over the shared communication medium, only one of the prefix or postfix of the joint packet over the shared communication medium, or data and one of the prefix or postfix of the joint packet over the shared communication medium. In one or more embodiments, a clock source indicates the timing when a source node is to transmit data. In one or more embodiments, a precision of the clock source is a function of a data rate of the shared communication medium.

In one or more embodiments, a communication network includes: an initial source node; a plurality of additional source nodes; a final source node; and a destination node; wherein the initial source node is arranged to transmit at least a prefix of a joint packet over a shared communication medium; wherein the one or more additional source nodes are arranged to transmit respective data of the joint packet over the shared communication medium in a respective time interval after the transmission by the initial source node; wherein the final source node is arranged to transmit at least a postfix of the joint packet after the transmission by the one or more additional source nodes; and wherein a destination node is arranged to receive the joint packet over the shared communication medium wherein a format of the joint packet comprises the prefix directly followed by data of the one or more source node and the data of the one or more source node is directly followed by the postfix. In one or more embodiments, an Ethernet header is transmitted as the prefix and a checksum is transmitted as the postfix. In one or more embodiments, the respective intervals are nonoverlapping time intervals for transmitting data of a source node. In one or more embodiments, the destination node has a standard physical layer/media access control layer (MAC/PHY) circuit which is arranged to receive the joint packet as a standard Ethernet packet over the shared communication medium and wherein upper communication layers to the MAC/PHY layers of the destination node parse the data from the different source nodes in the joint packet. In one or more embodiments, one source node is arranged to determine that the one source has no data to transmit and transmit only an alive signature in the joint packet indicative of the one source node being operational and not transmit any data. In one or more embodiments, the one source node is arranged to determine that a prefix or postfix of a second joint packet is not transmitted by another source node and transmit the prefix or postfix of the second joint packet. In one or more embodiments, the one source node that transmits the postfix of the second joint packet is a most recent source node that transmitted data and the one source node that transmits the prefix of the second joint packet is a first source node which has data to transmit. In one or more embodiments, the shared communication medium is a low speed network, the network including a high speed network, wherein the destination node is further arranged to transmit data of each of the source nodes in a respective standard packet over a high speed network. In one or more embodiments, the standard packet identifies the source node which generated the data in the standard packet.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more content processing apparatus such as a processor to perform the operations described (such as a program encoded in a non-transitory computer-readable communication medium, which can be a memory device, a storage device, a machine-readable storage substrate, or other physical, machine readable communication medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

## Claims

1. A communication network comprising:
an initial source node;
a plurality of additional source nodes;
a final source node; and
a destination node;
wherein the initial source node is arranged to transmit at least a prefix of a joint packet over a shared communication medium;
wherein the one or more additional source nodes are arranged to transmit respective data of the joint packet over the shared communication medium in a respective time interval after the transmission by the initial source node;
wherein the final source node is arranged to transmit at least a postfix of the joint packet after the transmission by the one or more additional source nodes; and
wherein a destination node is arranged to receive the joint packet over the shared communication medium, wherein a format of the joint packet comprises the prefix directly followed by data of the one or more source node and the data of the one or more source node is directly followed by the postfix.

2. The communication network of claim 1, wherein an Ethernet header is transmitted as the prefix and a checksum is transmitted as the postfix.

3. The communication network of claim 1 or 2, wherein the respective intervals are nonoverlapping time intervals for transmitting data of a source node.

4. The communication network of any of the preceding claims, wherein the destination node has a standard physical layer/media access control layer (MAC/PHY) circuit which is arranged to receive the joint packet as a standard Ethernet packet over the shared communication medium and wherein upper communication layers to the MAC/PHY layers of the destination node parse the data from the different source nodes in the joint packet.

5. The communication network of any of the preceding claims, wherein one source node is arranged to determine that the one source has no data to transmit and transmit only an alive signature in the joint packet indicative of the one source node being operational and not transmit any data.

6. The communication network of any of the preceding claims, wherein one source node is arranged to determine that a prefix or postfix of a second joint packet is not transmitted by another source node and transmit the prefix or postfix of the second joint packet.

7. The communication network of claim 6, wherein the one source node that transmits the postfix of the second joint packet is a most recent source node that transmitted data and the one source node that transmits the prefix of the second joint packet is a first source node which has data to transmit.

8. The communication network of any of the preceding claims, wherein the shared communication medium is a low speed network, the network comprising a high speed network, wherein the destination node is further arranged to transmit data of each of the source nodes in a respective standard packet over a high speed network.

9. The communication network of claim 8, wherein the standard packet identifies the source node which generated the data in the standard packet.

10. A method comprising:
transmitting, by an initial source node, at least a prefix of a joint packet over a shared communication medium;
transmitting, by one or more additional source nodes on the shared communication medium, respective data of the joint packet over the shared communication medium after the transmission by the initial source node in a respective time interval;
transmitting, by a final source node on the shared communication medium, at least a postfix of the joint packet after the transmission by the one or more additional source nodes; and
receiving, by the destination node, the joint packet over the shared communication medium, wherein a format of the joint packet comprises the prefix directly followed by data of the one or more source node and the data of the one or more source node is directly followed by the postfix.

11. The method of claim 10, wherein the transmission by the initial node, the one or more additional source nodes, and the final node do not overlap in time.

12. The method of claim 10 or 11, further comprising determining, by one source node, that the one source has no data to transmit and transmitting by the one source node only an alive signature in the joint packet indicative of the source node being operational and not transmitting any data.

13. The method of any of the preceding claims 10 to 12, further comprising signaling a timing when the one or more additional source nodes are to transmit respective data.

14. The method of any of the preceding claims 10 to 13, further comprising determining, by one source node, that a prefix or postfix of a second joint packet is not transmitted by another source node and transmitting, by the one source node, the prefix or postfix of the second joint packet.

15. The method of claim 14, wherein the one source node that transmits the postfix of the second joint packet is a most recent source node that transmitted data and the one source node that transmits the prefix of the second joint packet is a first source node which has data to transmit.
